# EUROPÄISCHE PATENTSCHRIFT

(11) **EP 4 151 473 B1**
(45) Veröffentlichungstag und Bekanntmachung des Hinweises auf die Patenterteilung: **06.05.2026**
(21) Anmeldenummer: 22196727.6
(22) Anmeldetag: 20.09.2022
(51) Int. Cl.: B60R 21/215

(54) **TEXTILES FLÄCHENELEMENT EINES AIRBAGS**
TEXTILE PANEL OF AN AIRBAG
ÉLÉMENT DE SURFACE TEXTILE D'UN AIRBAG

(30) Priorität: 20.09.2021 DE 102021124189
(43) Veröffentlichungstag der Anmeldung: 22.03.2023
(73) Patentinhaber: RSW GmbH, 82327 Tutzing (DE)
(72) Erfinder: Roring, Albert, 48599 Gronau (DE); Schulze Wehninck, Rembert, 82327 Tutzing (DE)
(74) Vertreter: Cohausz Hannig Borkowski Wißgott

(56) Entgegenhaltungen:
- WO-A1-2008/101681
- WO-A1-2013/110250
- WO-A1-2020/038596
- CN-U- 209 144 387
- DE-A1- 102008 042 657

## Beschreibung

Die Erfindung betrifft einen Airbag mit einem textilen Flächenelement, das mit einem zweiten Bereich an der Innenseite eines Airbag-Schusskanals und mit einem ersten Bereich an der Unterseite einer Airbagklappe befestigt ist, wobei die Verbindung zwischen dem ersten und dem zweiten Bereich ein Gelenk bildet, das Fäden der Grundstruktur des Flächenelements, Opferfäden und zusätzlich Stoppfäden aufweist, die eine größere Reißfestigkeit als die Opferfäden haben.

Aus der EP 2 057 044 B1, die den Oberbegriff des Anspruchs 1 bildet, ist es bekannt, das textile Flächenelement eines textilen Scharniers eines Airbags neben der textilen Grundstruktur mit Stoppfäden zu versehen, die nach dem Auslösen des Airbags nicht reißen, so dass die Klappe(n) des Airbags nicht in den Innenraum des Kfz gelangen. Bei der Herstellung des Airbags muss sehr genau darauf geachtet werden, dass der Scharnierbereich exakt den Bereich des Flächenelements trifft, in dem sich die Stoppfäden befinden.

WO2013110250A1 zeigt eine Abdeckung für einen Airbag mit mindestens einem Airbagdeckel, der an dem, den Airbagdeckel umgebenden, feststehenden Abdeckungsbereich durch ein textiles Scharnier angelenkt ist, wobei das Verdichten von Stoppfaden dadurch erreicht wird, dass sie wellenförmig oder schlaufenförmig im Scharnierbereich angeordnet sind. Unter Wellen und Schlaufen werden aber auch schlangenförmige, maanderförmige, schraubenförmige oder wickelförmige Formen des Stoppfadens verstanden.

Aufgabe der Erfindung ist es, die Herstellung eines Airbags zu vereinfachen und die Wirkung der Stoppfäden zu verbessern.

Diese Aufgabe wird erfindungsgemäß durch die Merkmale des Anspruchs 1 gelöst. Dabei sind die Stoppfäden und die Opferfäden nicht nur im Bereich des Gelenks, sondern im textilen Flächenelement über dessen gesamte Fläche verteilt angeordnet und die Stoppfäden bilden jeweils eine Wendel, die sich entlang der gesamten Länge des jeweiligen Stoppfadens erstreckt.

Im Stand der Technik sind die Stoppfäden nur im Bereich des Gelenks angeordnet, so dass bei der Herstellung des Airbags darauf geachtet werden muss, dass das Gelenk exakt in dem Bereich zu liegen kommt, in dem die Stoppfäden sich im Flächenelement befinden. Bei der neuen ganzflächigen Verteilung der Stoppfäden über das Flächenelement kann jeder Bereich des Flächenelements für das Gelenk verwendet werden, so dass die Produktion einfacher und fehlerfreier ist.

Vorzugsweise sind die Stoppfäden über die gesamte Fläche des textilen Flächenelements gleichmäßig verteilt angeordnet.

Besonders vorteilhaft ist es, wenn auf einer Seitenfläche des textilen Flächenelements Fäden der Grundstruktur und/oder die Opferfäden angeordnet sind, und auf der gegenüberliegenden Seitenfläche des textilen Flächenelements die Stoppfäden angeordnet sind.

Ferner wird vorgeschlagen, dass das textile Flächenelement im Kunststoff der Airbagklappe und der Schusskanalwand eingebettet ist.

Dadurch, dass die Stoppfäden eine Wendel bilden, wird ein größerer Dehnungsweg der Stoppfäden beim Aufklappen der Klappe erreicht.

Ein Ausführungsbeispiel der Erfindung ist in den Zeichnungen schematisch dargestellt und wird im Folgenden näher beschrieben. Es zeigen
- Fig. 1: einen Schnitt durch eine Airbagvorrichtung,
- Fig. 2: eine schematische Darstellung der Fäden im textilen Flächenelement bei Weglassen des Kunstoffs des Flächenelements.

Die Airbaganordnung besitzt einen das Prallkissen 7 aufnehmenden Raum 12, der den Schusskanal bildet, von Schusskanalwänden 9 umgeben ist und von einer Abdeckung 2 verschlossen ist, die Sollbruchlinien 2a aufweist. Die Abdeckung 2 bildet mit einem Klappenbereich eine Airbagdurchtrittsöffnung, wenn nach Auslösen des Prallkissens 7 die Abdeckung 2 an den Sollbruchlinien aufreißt und nach außen aufklappt. Hierbei bleibt die von der Abdeckung 2 gebildete Klappe 1 mit einem Rand, der ein Gelenk 11 bildet, an der übrigen Abdeckung befestigt.

Die Abdeckung 2 ist von einer Schaumschicht 5 bedeckt, auf der außen ein dekoratives Oberflächenmaterial 6 aufliegt.

Auf der Unterseite der Abdeckung 2 ist mindestens ein erster Bereich F1 eines textilen Flächenelements F befestigt, wobei das textile Flächenelement in Kunststoff eingebettete Fäden a einer Grundstruktur, im Bereich des Gelenks 11 reißende Opferfäden c und Stoppfäden b aufweist, die nicht reißen sollen und deshalb eine größere Reißfestigkeit aufweisen, als die Fäden a der Grundstruktur, insbesondere als die Opferfäden. Hierbei besitzt das textile Flächenelement F eine dünne Kunststoffschicht, in der die Fäden a,b,c eingebettet sind.

Dabei kann die Abdeckung 2 auf den ersten Bereich F1 aufgespritzt sein. Das Material der Airbagklappe 1 und das Herstellungsverfahren sind in der EP 2 727 775 A1 beschrieben.

Der erste Bereich F1 des textilen Flächenelements F ist mit der Airbagklappe bzw. mit dem die Airbagklappe 1 bildenden Bereich der Abdeckung 2 verbunden, wobei die Fäden a,b,c in den Kunststoff der Abdeckung 2 eindringen.

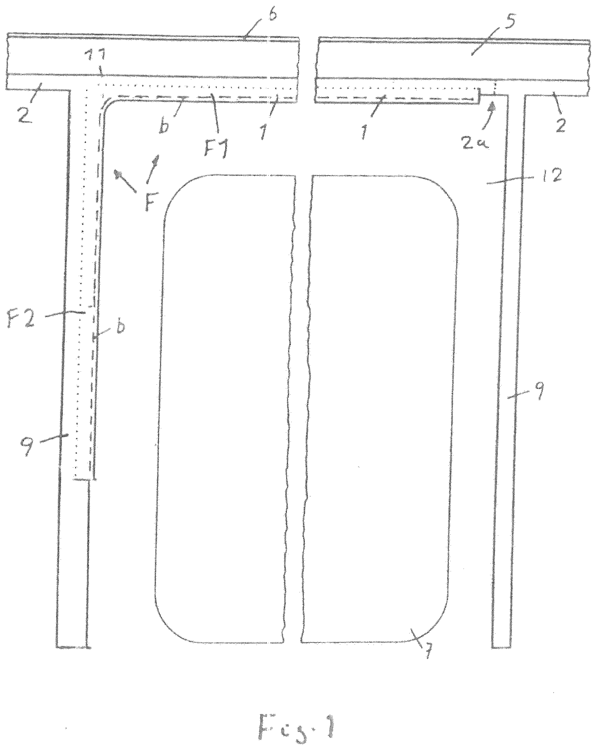

Die Airbagdurchtrittsöffnung ist, wie in Fig. 1 dargestellt, durch eine einzige Airbagklappe 1 verschlossen, die die Gelenkstelle 11 aufweist. Es können aber auch zwei Airbagklappen mit an gegenüber liegenden Seiten angeordneten Gelenkstellen angeordnet sein. Die Airbagklappe(n), insb. der zweite Bereich F2 ist/sind jeweils über die Gelenkstelle 11 an den zweiten Bereich F2, der eine Klappenstützwand bildet, angeformt, die sich in das Innere des Raums 12 und damit des Schusskanals erstreckt. Hierbei liegt der zweite Bereich F2 an der Innenfläche der Schusskanalwand 9 an und ist an dieser befestigt, insbesondere angeformt.

Wesentlich ist, dass die Stoppfäden b und die Opferfäden c nicht nur im Bereich des Gelenks 11, sondern im textilen Flächenelement F über dessen gesamte Fläche und damit über beide Bereiche F1 und F2 insbesondere gleichmäßig verteilt angeordnet sind. Vorzugsweise sind hierbei auf einer Seitenfläche des Flächenelements F Fäden der Grundstruktur a und/oder die Opferfäden b angeordnet, und auf der gegenüberliegenden Seitenfläche des Flächenelements sind die Stoppfäden angeordnet.

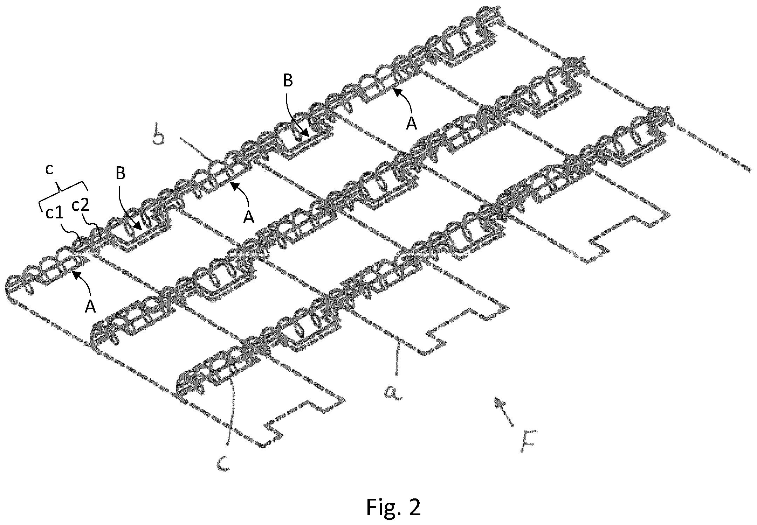

Die Stoppfäden b sind über ihre gesamte Länge wendelförmig bzw. schraubenförmig, d.h., sie bilden eine Wendel/Schraube, wie in Figur 2 dargestellt.

## Patentansprüche

1. Airbag mit einem textilen Flächenelement (F), das mit einem zweiten Bereich (F2) an der Innenseite eines Airbag-Schusskanals und mit einem ersten Bereich (F1) an der Unterseite einer Airbagklappe (1) befestigt ist, wobei die Verbindung zwischen dem ersten und dem zweiten Bereich (F1, F2) ein Gelenk (11) bildet, das Fäden (a) einer Grundstruktur des Flächenelements (F), Opferfäden (c) und zusätzlich Stoppfäden (b) aufweist, die eine größere Reißfestigkeit aufweisen als die Opferfäden (c), wobei
die Stoppfäden (b) und die Opferfäden (c) nicht nur im Bereich des Gelenks (11) sondern im textilen Flächenelement (F) über dessen gesamte Fläche verteilt angeordnet sind, **dadurch gekennzeichnet, dass** die Stoppfäden (b) jeweils eine Wendel bilden, die sich entlang der gesamten Länge des jeweiligen Stoppfadens (b) erstreckt.

2. Airbag nach Anspruch 1, **dadurch gekennzeichnet,**
**dass** die Stoppfäden (b) über die gesamte Fläche des textilen Flächenelements (F) gleichmäßig verteilt angeordnet sind.

3. Airbag nach Anspruch 1 oder 2, **dadurch gekennzeichnet,**
**dass** auf einer Seitenfläche des textilen Flächenelements (F) Fäden (a) der Grundstruktur und/oder die Opferfäden (c) angeordnet sind, und auf der gegenüberliegenden Seitenfläche des textilen Flächenelements (F) die Stoppfäden (b) angeordnet sind.

4. Airbag nach einem der vorherigen Ansprüche, **dadurch gekennzeichnet,**
**dass** das textile Flächenelement (F) im Kunststoff der Airbagklappe (1) und der Schusskanalwand (9) eingebettet ist.

## Claims

1. Airbag with a textile sheet element (F) that is fixed with a second area (F2) to the inner side of an airbag chute and with a first area (F1) to the underside of an airbag flap (1), wherein the connection between the first and the second area (F1, F2) forms a hinge (11) comprising threads (a) of a basic structure of the sheet element (F), sacrificial threads (c) and in addition stop threads (b) which have a greater tensile strength than the sacrificial threads (c), wherein the stop threads (b) and the sacrificial threads (c) are arranged not only in the area of the hinge (11) but are distributed over the entire extent of the textile sheet element (F), **characterized in that** the stop threads (b) each form a helix that extends across the entire length of the respective stop threads (b).

2. Airbag according to claim 1, **characterized in that** the stop threads (b) are distributed evenly over the entire extent of the textile sheet element (F).

3. Airbag according to claim 1 or 2, **characterized in that** threads (a) of the basic structure and/or the sacrificial threads (c) are arranged on one side surface of the textile sheet element (F), and the stop threads (b) are arranged on the opposite side surface of the textile sheet element (F).

4. Airbag according to one of the preceding claims, **characterized in that** the textile sheet element (F) is embedded in the plastic of the airbag flap (1) and the wall (9) of the chute.

## Revendications

1. Airbag comprenant un élément en feuille textile (F) qui est fixé par une deuxième zone (F2) à la face interne d'un conduit d'airbag et par une première zone (F1) à la face inférieure d'un volet d'airbag (1), dans lequel la jonction entre la première et la deuxième zone (F1, F2) forme une charnière (11) comprenant des fils (a) de la structure de base de l'élément en feuille (F), des fils sacrificiels (c) et, en outre, des fils d'arrêt (b) qui présentent une résistance à la traction supérieure à celle des fils sacrificiels (c), dans lequel les fils d'arrêt (b) et les fils sacrificiels (c) sont disposés non seulement dans la zone de la charnière (11), mais sont répartis sur toute l'étendue de l'élément en feuille textile (F), **caractérisé en ce que** les fils d'arrêt (b) forment chacun une hélice qui s'étend sur toute la longueur des fils d'arrêt (b) respectifs.

2. Airbag selon la revendication 1, **caractérisé en ce que** les fils d'arrêt (b) sont répartis uniformément sur toute l'étendue de l'élément en feuille textile (F).

3. Airbag selon la revendication 1 ou 2, **caractérisé en ce que** les fils (a) de la structure de base et/ou les fils sacrificiels (c) sont disposés sur une face latérale de l'élément en feuille textile (F), et les fils d'arrêt (b) sont disposés sur la face latérale opposée de l'élément en feuille textile (F).

4. Airbag selon l'une des revendications précédentes, **caractérisé en ce que** l'élément en feuille textile (F) est noyé dans la matière plastique du volet d'airbag (1) et de la paroi (9) de la goulotte.
